# EUROPÄISCHE PATENTSCHRIFT

(11) **EP 4 530 858 B1**
(45) Veröffentlichungstag und Bekanntmachung des Hinweises auf die Patenterteilung: **15.04.2026**
(21) Anmeldenummer: 23200601.5
(22) Anmeldetag: 28.09.2023
(51) Int. Cl.: G06F 11/18

(54) **VERFAHREN ZUM RECHNERGESTÜTZTEN DURCHFÜHREN EINES TECHNISCHEN PROZESSES IN VERARBEITUNGSEINHEITEN**
METHOD FOR THE COMPUTER-AIDED EXECUTION OF A TECHNICAL PROCESS IN PROCESSING UNITS
PROCÉDÉ DE MISE EN UVRE ASSISTÉE PAR ORDINATEUR D'UN PROCESSUS TECHNIQUE DANS DES UNITÉS DE TRAITEMENT

(43) Veröffentlichungstag der Anmeldung: 02.04.2025
(73) Patentinhaber: Siemens Mobility GmbH, 80997 München (DE)
(72) Erfinder: Bolz, Matthias, 38106 Braunschweig (DE); Gerken, Stefan, 38116 Braunschweig (DE); Hofer, Michael, 8142 Uitikon, Waldegg (CH); Steffens, Sonja, 38173 Evessen (DE)
(74) Vertreter: Siemens Patent Attorneys

(56) Entgegenhaltungen:
- US-A1- 2016 314 057
- US-A1- 2020 175 168

## Beschreibung

### Technisches Gebiet

Folgender Gegenstand ist von der Erfindung umfasst: ein Verfahren zum Durchführen eines technischen Prozesses. Ferner ist folgender Gegenstand von der Erfindung umfasst: eine Rechenumgebung aufweisend mehrere Recheninstanzen. Ferner ist folgender Gegenstand von der Erfindung umfasst: ein Computerprogramm, umfassend Programmbefehle. Ferner ist folgender Gegenstand von der Erfindung umfasst: ein Speichermedium, welches durch einen Computer lesbar ist.

### Technischer Hintergrund

Für funktional sichere Applikationen im Bahnumfeld gemäß EN50128, EN50129 mit einem bzw. SIL > 2 sind diverse Maßnahmen erforderlich, um die funktionale Sicherheit, u. a. durch Fehlerfreiheit, zu gewährleisten. Die Anforderungen an die Zertifizierung sicherheitsrelevanter Anwendungen beispielsweise in der Bahntechnik sind sehr hoch. Gemäß Norm EN 50129 werden für Sicherheitsfunktionen vier Sicherheits-Integritätslevel oder Englisch Safety Integrity Level (SIL) beziehungsweise Sicherheits-Anforderungsstufen für die geforderte funktionale Sicherheit (Safety) unterschieden. Hierbei stellt der Sicherheits-Integritätslevel 4 die höchste und der Sicherheits-Integritätslevel 1 die niedrigste Stufe der Sicherheits-Integrität dar. Der jeweilige Sicherheits-Integritätslevel beeinflusst das Vertrauensintervall eines Messwertes dahingehend, dass das Vertrauensintervall umso kleiner ist, je höher der Sicherheits-Integritätslevel ist, der seitens der jeweiligen Vorrichtung zu erfüllen ist. Die Dimension der funktionalen Sicherheit der verschiedenen Sicherheits-Integritätslevel lässt sich anschaulich mit der zu erwartenden Häufigkeit eines Ausfalls des sicherheitsrelevanten Systems MTBF (Mean Time Between Failures) beschreiben, wobei dies in Jahren (a) angegeben wird. Diese liegt bei SIL-1 im Bereich von 10 ...100 a, bei SIL-2 im Bereich von 100 ... 1000 a, bei SIL-3 im Bereich von 1000 ...10000 a, und bei SIL-4 im Bereich von 10000 ... 100000 a. Eine zentrale Maßnahme ist dabei die Verarbeitung in unabhängigen Recheninstanzen, die entweder hinreichend unabhängig und/oder hinreichend fehlerfrei sind, um das geforderte Sicherheitsniveau zu gewährleisten. Für das Zusammenführen der unabhängigen Verarbeitungen einer Gruppe von Recheninstanzen wird ein Vergleicher, auch Voter genannt, benötigt, welcher die Identität der Verarbeitungsergebnisse überprüft und bei Gleichheit oder mindestens erfolgreichem Mehrheitsentscheid das geprüfte Ergebnis zur weiteren Verarbeitung durch dieselbe oder weitere Recheninstanzen freigibt.

Ein Vergleicher, auch Voter genannt, ist eine Einrichtung zur Ermittlung einer Funktionsfähigkeit redundanter Systeme. Mehrheitsentscheidungssysteme, kurz MooN Systeme, werden der aktiven Redundanz zugeordnet (Majoritätsredundanz). Sie werden als Mittel zur Steigerung der Fehlertoleranz von Systemen, für die eine hohe funktionale Sicherheit (Safety) gegen Ausfall oder Auftreten von Fehlern gefordert wird, eingesetzt. Es gibt verschiedene Architekturen von MooN Systemen. Praktische Anwendungen finden sich in simplex (1oo2), duplex (2oo2), triplex (2oo3) und quadruplex (3oo4) Architekturen wieder, Die Ergebnisse der MooN Systeme werden von dem Mehrheitsentscheider (Voter) verglichen, um das Ergebnis der Mehrheit weiterzugeben. Die Weitergabe des Ergebnisses erfolgt, solange mindestens M der N Systeme funktionieren (gilt z. B. für Hardwarekomponenten und Maschinen) bzw. M der N Ergebnisse beim Vergleichen übereinstimmen (gilt z. B. für Daten und Messwerte). Anderenfalls gilt das Gesamtsystem als ausgefallen, und es kann ein Fehler ausgegeben werden.

Ein Voter kann softwaretechnisch oder hardwaretechnisch realisiert sein. Ein softwaretechnisch realisierter Voter besteht aus einem Programmmodul für das Vergleichen, auch Voting genannt, welches als Eingaben die oben genannten Ergebnisse verarbeitet und als Ausgabe einen Fehler oder auch eine Freigabe generiert. Hardwaretechnisch kann ein Voter auch als Analogrechner ausgeführt sein, der ein Voting durch eine logische Verknüpfung der Bausteine des Analogrechners durchführt. Insbesondere kann ein Programmmodul auch auf einem Prozessor laufen, der selber an der Erzeugung der Ergebnisse nicht beteiligt ist. Hierdurch entsteht eine hardwaretechnische Trennung der Aufgaben der Erzeugung der Ergebnisse auf der einen Seite und der Bewertung der Ergebnisse durch Vergleichen auf der anderen Seite. Dies hat den Vorteil, dass die Verfahrensschritte der Erzeugung der Ergebnisse sowie des Vergleichens der Ergebnisse sich weniger beeinflussen können und dadurch die Betriebssicherheit des Prozesses des Vergleichens gesteigert werden kann.

Das Voting ist signifikant aufwändig und bedarf auch einer strikten Synchronisation zwischen den unabhängigen Recheninstanzen, damit parallel erzeugte und damit identische Ergebnisse gleichzeitig für das im Voter durchgeführte Voting zur Verfügung stehen. Dieser Aufwand hängt stark vom zugrunde liegenden Lösungsansatz ab (in Hardware und/oder Software gelöst) und steigt stark an, wenn die Lösung in Software erfolgt. Im Rahmen einer wünschenswerten Nutzung von COTS-Hardware (Commercial-off-the-Shelf) statt sehr spezifischen, proprietären Hardware-Lösungen ist einer Absicherung der Prozesse durch eine geeignete Software allerdings zwingend erforderlich, und zwar einerseits bzgl. der Verfahrenssicherung der ablaufenden Prozesse und andererseits bzgl. der Synchronisation der Prozesse, d.h. das Abwarten aller Ergebnisse in Form von zu vergleichenden redundanten Nachrichten als Voraussetzung für ein zuverlässiges Voting. Dies stellt ein zentrales Problem dar.

Gemäß dem Stand der Technik werden zur Erreichung der funktionalen Sicherheit derartige unabhängige Verarbeitungseinheiten auf einem Prozessor (einer CPU oder einem Rechenkern, auch Core genannt, der CPU) geführt, wozu bekannte und hinreichende Methoden zur deterministischen Verarbeitung (zum Beispiel Taskpriorisierung) existieren. Ein Vergleich der Ergebnisse führt daher mit hoher Zuverlässigkeit zur Feststellung, dass die unabhängigen Verarbeitungsergebnisse identisch sind. Dieses Konzept ist beispielsweise durch S. Steffens et. Al. In «Entwicklung einer neuen Safety-Plattform DS3 - vom Forschungsprojekt bis zur Inbetriebnahme», SIGNAL + DRAHT (113) 6 / 2021 beschrieben.

Dokument US 2016/314057 A1 beschreibt ein computerimplementiertes Verfahren zum Erkennen eines Fehlers in einem System und umfasst die folgenden Schritte: Ausführen von mindestens drei virtuellen Maschinen, wobei jede virtuelle Maschine dieselbe Anwendungssoftware in getrennten und isolierten Speichersegmenten und in einem dedizierten Kern eines Mehrkernprozessors ausführt. Die virtuellen Maschinen werden synchronisiert und gleichzeitig von einem gemeinsamen Hypervisor ausgeführt. Fehlerfreie virtuelle Maschinen stellen innerhalb eines vordefinierten Zeitintervalls eine identische Ausgabenachricht bereit.

Dokument US 2020/175168 A1 beschreibt ein Computer-/Datenverarbeitungsgerät, umfassend: eine Vielzahl von Computereinheiten, wobei jede Computereinheit eine Computerressource umfasst; das Computergerät umfasst mindestens drei Computereinheiten, wobei jede Computereinheit eine/dieselbe Computerressource umfasst; jede Computereinheit umfasst ferner einen Computereinheit-Zugriffsmanager, wobei jeder Zugriffsmanager so angepasst ist, dass er den Zugriff auf die Computerressource der jeweiligen Computereinheit als Reaktion auf mindestens eine Anforderung steuert; wobei der Computereinheit-Zugriffsmanager eine Antwort auf die mindestens eine Anforderung nur dann zulässt, wenn eine Mehrheit der Computereinheiten dieselbe Antwort auf die mindestens eine Anforderung bereitstellt; und wobei das Computergerät ein Netzwerk auf einem Chip umfasst, auf einem Chip bereitgestellt ist und/oder einen integrierten Chip (IC) oder Mikroprozessor umfasst.

Bei dem beschriebenen Verfahren werden beim parallelen Bearbeiten von mehreren funktional sicheren Applikationsprogrammen, welche im fortlaufenden Nachrichtenaustausch in einem Verbund kooperativ zusammenarbeiten, für jedes Applikationsprogramm separat die Synchronisation und der Vergleich durchgeführt, bevor die so geprüften und damit (im Sinne einer funktionalen Sicherheit oder Safety) sicheren Nachrichten zwischen den kooperierenden Applikationsprogrammen ausgetauscht werden. Der o.g. stark ansteigende Aufwand zur Beherrschung der Aufgabe kumuliert damit über die Anzahl involvierter Applikationsprogramme derart, dass die Gesamtreaktionszeiten für Verarbeitungen in einem derartigen Verbund signifikant und sogar unzulässig hoch ansteigen können.

### Zusammenfassung der Erfindung

Die Aufgabe der Erfindung besteht darin, die beschriebenen Probleme im Stand der Technik zu beheben. Insbesondere ist es Aufgabe, ein Verfahren zum Durchführen eines technischen Prozesses, eine Rechenumgebung, aufweisend mehrere Recheninstanzen zum Durchführen des technischen Prozesses, ein Computerprogramm, umfassend Programmbefehle, und ein Speichermedium, welches durch einen Computer lesbar ist, anzugeben, wobei ein Rechenaufwand, der mit einer funktional sicheren Durchführung des Verfahrens verbunden ist, möglichst geringgehalten wird.

Beschrieben wird gemäß einem ersten Aspekt der Erfindung ein Verfahren zum rechnergestützten Durchführen eines technischen Prozesses,
a) bei dem Applikationsprogramme in einer Redundanzgruppe, bestehend aus einer Vielzahl N von Recheninstanzen, redundant ausgeführt werden und dabei die Vielzahl N von redundanten Ergebnissen berechnen (wobei zum Ausführen der Applikationsprogramme in an sich bekannter Weise Nachrichten empfangen, bearbeitet und gesendet werden, letzteres, wenn Ergebnisse des Ausführens der Applikationsprogramme an andere Recheninstanzen oder an andere an dem technischen Prozess beteiligte Hardwarekomponenten übertragen werden sollen) und
b) anschließend bei einem Voting ein Vergleichen der Vielzahl N von den Ergebnissen enthaltenden Nachrichten durchgeführt wird, wobei
c) in dem Fall, dass eine Mehrheit der Nachrichten identische Ergebnisse enthalten, die besagte Mehrheit von Nachrichten für das weitere Durchführen des technischen Prozesses verwendet wird.

Zur Vermeidung von Missverständnissen sei an dieser Stelle angemerkt, dass einzelne Anspruchsmerkmale mit kleinen lateinischen Buchstaben durchnummeriert werden, ohne dass dabei Rücksicht auf die Anspruchsnummerierung genommen wird. Dies bedeutet, dass jeder Buchstabe im gesamten Anspruchssatz nur einmal vorkommt, was eine eindeutige Adressierung der betreffenden Anspruchsmerkmale ohne Nennung der Anspruchsnummer ermöglicht. Deswegen kommt der Reihenfolge der Buchstaben jedoch keine Bedeutung zu.

Ist von einer Vielzahl von redundanten Ergebnissen die Rede, so ist das technische Vorliegen mehrerer Ergebnisse in verschiedenen Nachrichten, repräsentiert durch verschiedene Datensätze, als Resultat von parallelen Berechnungen gemeint.

Im Rahmen dieser Erfindung ist also auch dann von mehreren Ergebnissen die Rede, wenn diese identisch sind und mit Blick auf den Informationsgehalt auch als ein Ergebnis betrachtet werden könnten. Die Ergebnisse werden in Form von Nachrichten von den beteiligten Recheninstanzen versendet und empfangen. Eine Mehrheit einer Vielzahl N von Nachrichten oder Ergebnissen kann auch gleich der Vielzahl N der Nachrichten oder Ergebnisse sein ("einstimmige Mehrheit").

Der Nutzinhalt einer Nachricht betrifft das auf die Bewältigung einer durch den technischen Prozess zu bewältigende Aufgabe gerichtete Ergebnis. Gleichzeitig sind in einer Nachricht aber auch Inhalte gespeichert, die zur Steuerung der in den Recheninstanzen ablaufenden Prozesse, die vorzugsweise durch Dienstprogramme bewältigt werden, vorgesehen sind (hierzu im Folgenden noch mehr). Diese Inhalte müssen nicht notwendigerweise identisch sein, damit ein Vergleichen zu der Aussage führt, dass die Ergebnisse einer Vielzahl von verglichenen Nachrichten identisch ist und sollen auch als Steuerinhalt bezeichnet werden.

Rechnergestützt oder computerimplementiert ist eine Vorrichtung, wenn diese mindestens einen Computer oder Prozessor aufweisen, oder ein Verfahren, wenn mindestens ein Computer oder Prozessor mindestens einen Verfahrensschritt des Verfahrens ausführt.

Eine Rechenumgebung ist eine IT-Infrastruktur, bestehend aus Komponenten wie Prozessoren, Speichereinheiten, Programmen und aus mit den Programmen zu verarbeitenden Daten, die zur Ausführung mindestens einer Applikation, die eine Aufgabe zu erfüllen hat, verwendet werden. Die IT-Infrastruktur kann auch aus einem Netzwerk der genannten Komponenten bestehen.

Eine Cloud (auch als Rechnerwolke oder Datenwolke bezeichnet) ist eine Rechenumgebung für ein sog. Cloud-Computing. Gemeint ist eine IT-Infrastruktur, welche über Schnittstellen eines Netzwerks wie das Internet verfügbar gemacht wird. Sie beinhaltet in der Regel Speicherplatz, Rechenleistung oder Software als Dienstleistung, ohne dass diese auf einer die Cloud nutzenden Recheninstanz installiert sein müssen. Die im Rahmen des Cloud-Computings angebotenen Dienstleistungen umfassen das gesamte Spektrum der Informationstechnik und beinhalten unter anderem die IT-Infrastruktur, Plattformen, Software und Rechenleistung, wobei der Cloud-Anbieter die angebotenen Ressourcen bedarfsgerecht an die Cloud-Nutzer verteilt, mit dem Ziel, die Ressourcen damit optimal auszuschöpfen.

Da in der Bahntechnik hohe Sicherheitsstandards hinsichtlich Funktion (Betriebssicherheit, Safety) sowie Angreifbarkeit (Übertragungssicherheit, Security) computerimplementierter Lösungen gelten, sind die Funktionalitäten einer Cloud, die in der Bahntechnik zum Einsatz kommt, hinsichtlich ihrer geteilten Verfügbarkeit üblicherweise begrenzt. Insbesondere, was den Zugriff eines potenziell unbegrenzten Kreises von Cloud-Nutzern angeht, sind daher Restriktionen erforderlich. Aber auch, was die Teilung von Rechenressourcen durch verschiedene Recheninstanzen angeht, muss mit Blick auf eine erforderliche Redundanz ein Zugriff begrenzt werden. Eine Technologie, die diese Restriktionen für die Bahntechnik berücksichtigt, wird im Zusammenhang mit dieser Erfindung auch als private Cloud bezeichnet, auch wenn eine private Cloud die mit Cloudtechnologie verbundenen technischen Merkmale nur eingeschränkt erfüllt.

Recheninstanzen (oder kurz Instanzen) bilden innerhalb einer Rechenumgebung funktionale Einheiten aus, die Applikationen (gegeben beispielsweise durch eine Anzahl von Programmmodulen) zugeordnet werden können und diese ausführen können. Diese funktionalen Einheiten bilden bei der Ausführung der Applikation physikalisch (beispielsweise Computer, Prozessor) und/oder virtuell (beispielsweise Programmmodul) in sich geschlossene Systeme.

Computer sind elektronische Geräte mit Datenverarbeitungseigenschaften. Computer können beispielsweise Clients, Server, Handheld-Computer, Kommunikationsgeräte und andere elektronische Geräte zur Datenverarbeitung sein, die Prozessoren und Speichereinheiten aufweisen können und über Schnittstellen auch zu einem Netzwerk zusammengeschlossen sein können.

Prozessoren können beispielsweise Wandler, Sensoren zur Erzeugung von Messsignalen oder elektronische Schaltungen sein. Bei einem Prozessor kann es sich um einen Hauptprozessor (engl. Central Processing Unit, CPU), einen Mikroprozessor, einen Mikrocontroller, oder einen digitalen Signalprozessor, möglicherweise in Kombination mit einer Speichereinheit zum Speichern von Programmbefehlen und Daten handeln. Auch kann unter einem Prozessor ein virtualisierter Prozessor oder eine Soft-CPU verstanden werden.

Speichereinheiten können als computerlesbarer Speicher in Form eines Arbeitsspeichers (engl. Random-Access Memory, RAM) oder Datenspeichers (Festplatte oder Datenträger) ausgeführt sein.

Programmmodule sind einzelne Software-Funktionseinheiten, die einen erfindungsgemäßen Programmablauf von Verfahrensschritten ermöglichen. Diese Software-Funktionseinheiten können in einem einzigen Computerprogramm oder in mehreren miteinander kommunizierenden Computerprogrammen verwirklicht sein. Die hierbei realisierten Schnittstellen können softwaretechnisch innerhalb eines einzigen Prozessors umgesetzt sein oder hardwaretechnisch, wenn mehrere Prozessoren zum Einsatz kommen.

Schnittstellen können hardwaretechnisch, beispielsweise kabelgebunden oder als Funkverbindung, oder softwaretechnisch, beispielsweise als Interaktion zwischen einzelnen Programmmodulen eines oder mehrerer Computerprogramme, realisiert sein.

Erfindungsgemäß ist vorgesehen, dass eine Vielzahl N von Verarbeitungseinheiten vorgesehen ist, wobei
d) in jeder Verarbeitungseinheit jeweils mehrere Recheninstanzen zusammengefasst sind, wobei jede Recheninstanz aus ein und derselben Redundanzgruppe einer anderen Verarbeitungseinheit zugeordnet ist,
e) die jeweils erzeugte Vielzahl N von redundanten Nachrichten bei dem Voting verglichen werden, wenn diese als externe Nachrichten an Recheninstanzen außerhalb der Verarbeitungseinheit, der die die zu vergleichende Nachricht erzeugende Recheninstanz angehört, versendet werden,
f) für Nachrichten, die als interne Nachrichten zwischen Recheninstanzen innerhalb einer Verarbeitungseinheit ausgetauscht werden, kein Voting durchgeführt wird.

Man könnte externe Nachrichten somit auch als Endergebnisse eines bestimmten Abschnittes des technischen Prozesses bezeichnen und interne Nachrichten als Zwischenergebnisse. Überprüft werden gemäß der Erfindung dann nur die redundanten Endergebnisse, die aus unterschiedlichen Verarbeitungseinheiten (nämlich der Vielzahl N eben dieser Verarbeitungseinheiten, die für das Voting eine Redundanzgruppe bilden) stammen. Hierbei handelt es sich um Nachrichten, deren Identität hinsichtlich des Nutzinhaltes für eine funktionale Sicherheit des Prozesses zwingend erforderlich ist, damit bei einer externen Übergabe dieser Nachrichten an andere Recheninstanzen (die vorzugsweise ebenfalls in Verarbeitungseinheiten zusammengefasst sein können) Fehler unter Berücksichtigung des erforderlichen Sicherheitslevels ausgeschlossen werden können.

Erfindungsgemäß werden interne Nachrichten, die nur von Recheninstanzen innerhalb der Verarbeitungseinheiten gesendet und empfangen werden nicht verglichen. Dies ist auch nicht notwendig, da die innerhalb der Verarbeitungseinheit ablaufenden Prozesse vor einem Zugriff von außerhalb der Verarbeitungseinheiten geschützt sind und die redundante Bearbeitung anderer Nachrichten der Vielzahl von Nachrichten auch in anderen Verarbeitungseinheiten läuft, was Interferenzen bei den parallel ablaufenden Prozessen ausschließt. Mit anderen Worten wird der Parallelisierungsprozess von der Ebene der Recheninstanzen auf eine höhere Ebene der Verarbeitungseinheiten gehoben, sodass die Prozesse innerhalb einer Verarbeitungseinheit nicht redundant ablaufen und dort vorteilhaft deswegen auch nicht oder zumindest sehr viel seltener synchronisiert werden müssen (hierzu im Folgenden noch mehr).

Die unerwünschte Kumulation von Aufgaben und damit verbundene übermäßige Verzögerungen können vorteilhaft mit einem erfindungsgemäß zugrundegelegten Paradigmenwechsel aufgelöst werden. Dieser Paradigmenwechsel besteht im Einsatz mehrerer Recheninstanzen, welche kooperativ und im fortlaufenden und asynchronen Austausch interner Nachrichten untereinander und in beliebiger Reihenfolge als zusammengefasste unabhängige Verarbeitungseinheit (im weiteren auch «Bubble» genannt) zusammenarbeiten und in einem einmaligen nachträglichen Vergleich der Verarbeitungsergebnisse (repräsentiert durch externe Nachrichten) der Vielzahl N derartiger Verarbeitungseinheiten die funktionale Sicherheit gewährleistet.

Zum Erreichen der funktionalen Sicherheit mehrerer zusammengefasster unabhängiger Verarbeitungseinheiten (Bubble), reicht für jede von der Verarbeitungseinheit an externe (d**.** h. außerhalb der Bubble liegende) Subsysteme oder Nachbarsysteme zu vermittelnde Nachricht (im Folgenden kurz als externe Nachricht bezeichnet) der einmalige sichere Vergleich über einen hinreichend großen Satz (Vielzahl N) von Nachrichten mit identischen Nutzinhalten (abgespeichert in hierfür reservierten Datenabschnitten der betreffenden Datensätze), die die Ergebnisse der von den Recheninstanzen zu bewältigenden Aufgaben darstellen. Diese Nachrichten wurden erfindungsgemäß vorher von den parallel arbeitenden Verarbeitungseinheiten erzeugt. Voraussetzung ist, dass alle Recheninstanzen einer Redundanzgruppe nach den für den angestrebten SIL der funktionalen Sicherheit notwendigen Voraussetzungen entwickelt und konfiguriert wurden. Für die zwischen den einzelnen Recheninstanzen innerhalb der Verarbeitungseinheit vermittelten (durch Recheninstanzen gesendeten und empfangenen) Nachrichten (im Folgenden als interne Nachrichten bezeichnet) kann aufgrund dieser Eigenschaft ein Voting vorteilhaft entfallen.

Der Effekt ist, dass insgesamt weniger Nachrichten in dem Voter verglichen werden müssen (nämlich nur die externen Nachrichten und nicht die internen Nachrichten) was vorteilhaft zu einem Performancegewinn bei der Abarbeitung der Aufgaben führt. Dieser Performancegewinn liegt neben der entfallenden Notwendigkeit, alle Nachrichten zu vergleichen, auch darin, dass die Recheninstanzen innerhalb der Verarbeitungseinheiten performanceorientiert und damit asynchron zu den anderen Recheninstanzen einer Redundanzgruppe arbeiten können, womit die Vorgabe von Taktzeiten in der Verarbeitungseinheit und damit verbundenen Leerlaufzeiten vermieden werden kann.

Beschrieben wird gemäß einem weiteren Aspekt der Erfindung eine Rechenumgebung aufweisend mehrere Recheninstanzen, wobei jeweils eine Vielzahl N von Recheninstanzen zu einer von mehreren Redundanzgruppen zusammengefasst sind und in jeder Redundanzgruppe alle Recheninstanzen dazu eingerichtet sind, ein Applikationsprogramm redundant auszuführen.

Erfindungsgemäß sind die oben erklärten Aspekte der Erfindung dadurch bestimmt,
dass die Rechenumgebung in die besagte Vielzahl N von Verarbeitungseinheiten aufgeteilt ist, wobei
n) in jeder dieser Verarbeitungseinheiten jeweils mehrere Recheninstanzen zusammengefasst sind,
o) keine dieser Verarbeitungseinheiten mehrere Recheninstanzen aus ein und derselben Redundanzgruppe enthält,
und dass die Rechenumgebung eine Recheninstanz aufweist, die eingerichtet ist,
p) als Voter bei einem Voting eine durch die Recheninstanzen erzeugte Vielzahl N von redundanten Nachrichten zu vergleichen, in dem Fall, dass diese als externe Nachrichten eine Verarbeitungseinheit verlassen und
q) Nachrichten nicht zu vergleichen, in dem Fall, dass diese als interne Nachrichten zwischen Recheninstanzen innerhalb der Verarbeitungseinheit ausgetauscht werden.

Die mit der beschriebenen Struktur der Rechenumgebung verbundenen Vorteile sind im Zusammenhang mit dem erfindungsgemäßen Verfahren bereits beschrieben worden und gelten in gleicher Weise auch für die Rechenumgebung, wenn diese zur Durchführung des erfindungsgemäßen Verfahrens zum Einsatz kommt.

Beschrieben wird gemäß einem weiteren Aspekt der Erfindung ein Computerprogramm, umfassend Programmbefehle, die bei der Ausführung des Programms durch einen Computer diesen dazu veranlassen, das erfindungsgemäße Verfahren auszuführen.

Gemäß der Erfindung wird somit ein Programmmodule enthaltendes Computerprogramm mit Programmbefehlen beschrieben, wobei mittels des Computerprogramms jeweils das erfindungsgemäße Verfahren und/oder dessen Ausführungsbeispiele ausführbar sind und mit der Ausführung die beschriebenen Vorteile erreicht werden.

Beschrieben wird gemäß einem weiteren Aspekt der Erfindung ein Speichermedium, welches durch einen Computer lesbar ist, auf dem das Computerprogrammprodukt nach dem letzten voranstehenden Anspruch gespeichert ist.

Darüber hinaus wird gemäß einem weiteren Aspekt der Erfindung also eine Bereitstellungsvorrichtung zum Speichern und/oder Bereitstellen des Computerprogramms in Form eines computerlesbaren Speichermediums beschrieben. Die Bereitstellungsvorrichtung ist beispielsweise eine Speichereinheit, die das Computerprogramm speichert und/oder bereitstellt. Alternativ oder zusätzlich ist die Bereitstellungsvorrichtung ein Netzwerkdienst, ein Computersystem, ein Serversystem, insbesondere ein verteiltes, beispielsweise cloudbasiertes Computersystem oder virtuelles Rechnersystem, welches das Computerprogramm auf einem computerlesbaren Speichermedium speichert und vorzugsweise in Form eines Datenstroms bereitstellt.

Die Bereitstellung erfolgt in Form von Programmdatensätzen als Datei, insbesondere als Downloaddatei, oder als Datenstrom, insbesondere als Downloaddatenstrom, des Computerprogramms. Das Computerprogramm wird beispielsweise unter Verwendung der Bereitstellungsvorrichtung in eine Rechenumgebung übertragen, sodass das erfindungsgemäße Verfahren in einer Recheninstanz dieser Rechenumgebung zur Ausführung gebracht werden kann.

Allgemeine Ausführungsbeispiele der Erfindung Weiterbildungen der Erfindung beschreibende Varianten werden nachfolgend ohne Beschränkung des grundlegenden Gedankens der Erfindung erläutert.

Gemäß einer Variante sind die oben erklärten Aspekte der Erfindung dadurch bestimmt, dass die Vielzahl von N Verarbeitungseinheiten in Arbeitszyklen arbeitet, wobei
g) zu Beginn jedes Arbeitszyklus für den Arbeitszyklus erforderliche, an die Recheninstanzen der betreffenden Verarbeitungseinheit gerichtete Nachrichten an diese Verarbeitungseinheit übergeben werden,
h) anschließend alle für die Ausführung der Applikationsprogramme erforderlichen Nachrichten durch die Recheninstanzen in der Vielzahl N von Verarbeitungseinheiten in identischer Reihenfolge verarbeitet werden, wobei neue redundante Nachrichten erzeugt werden,
i) anschließend die neuen redundanten Nachrichten in den Schritten b), c), d) und e) (s. o.) miteinander verglichen werden.

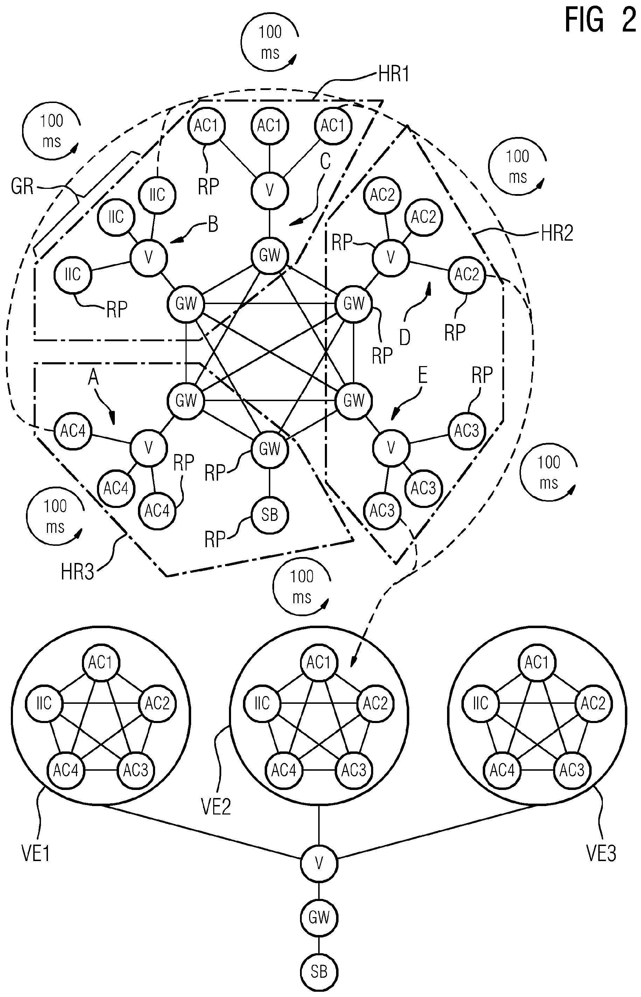

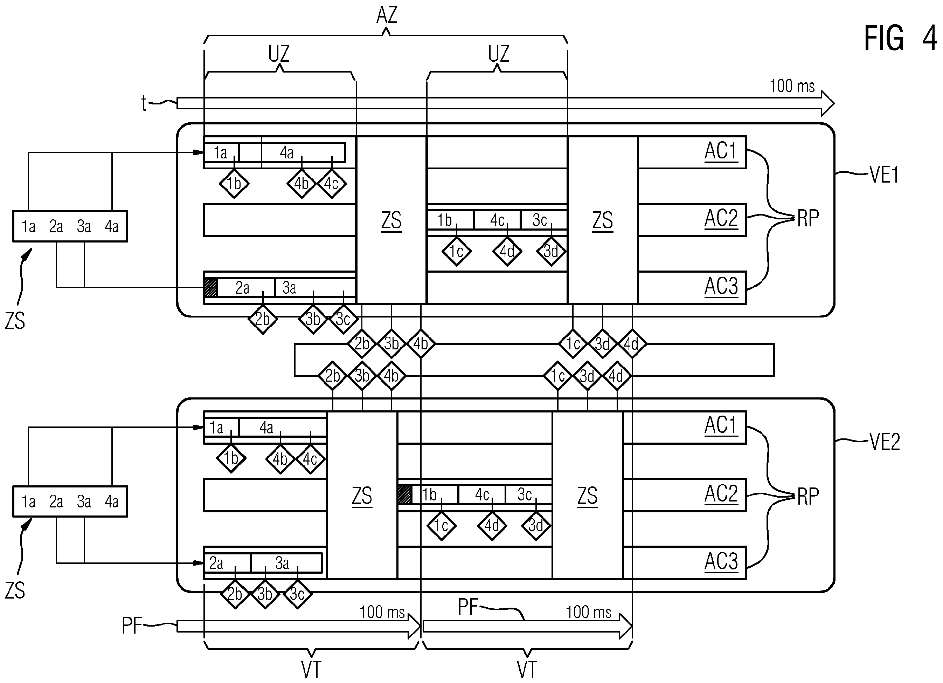

Dabei wird gemäß dieser Ausgestaltung der Erfindung ein weiteres Problem gelöst, das anhand eines Beispiels von 3 Recheninstanzen A, B, C einer Verarbeitungseinheit (in den Figuren 2 und 4 auch AC1, AC2 und AC3 genannt) im Vergleich zu anderen Verarbeitungseinheiten ein und derselben Redundanzgruppe erklärt werden soll. Im Falle eines auftretenden zeitlichen Versatzes (sogenannter Jitter) würde zum Beispiel die Recheninstanz B Nachrichten von den Recheninstanzen A und C in der ersten Verarbeitungseinheit in einer anderen Reihenfolge erhalten als in der zweiten oder dritten (vierten ...) Verarbeitungseinheit der betreffenden Redundanzgruppe, wodurch in den verschiedenen Recheneinheiten der Redundanzgruppe unterschiedliche Verarbeitungsergebnisse resultieren würden. Unterschiedlich bedeutet hier sowohl, dass es zu unterschiedlichen Inhalten der einzelnen Verarbeitungsergebnisse kommen kann, als auch, dass es trotz identischen Inhalten zu unterschiedlichen Reihenfolgen derselben kommen kann. Unterschiedliche Ergebnisse würden beim Voting jedoch zur Ausgabe eines Fehlers führen, selbst wenn die tatsächlich berechneten Ergebnisse (Nutzdaten) eigentlich übereinstimmen.

Der Vorteil dieser Ausgestaltung der Erfindung ist, dass das Auftreten eines Jitters keine Auswirkungen auf die nachfolgend berechneten Ergebnisse mehr hat. Mit anderen Worten wird trotz Auftreten eines Jitters ein Gesamtergebnis erzeugt, welches bei einem Voting als identisch bewertet wird (selbstverständlich vorausgesetzt, dass die erzeugten Nutzinhalte gleich sind, denn ansonsten soll das Voting ja gerade einen Fehler ausgegeben). Dies wird erreicht, indem sichergestellt wird, dass die Nachrichten immer in einer identischen Reihenfolge verarbeitet werden. Die identische Reihenfolge wird durch einen geeigneten Sortieralgorithmus sichergestellt. Derartige Sortieralgorithmen sind an sich bekannt. Die Sortierkriterien können frei gewählt werden, es ist lediglich erforderlich, dass diese für alle Verarbeitungseinheiten einer Redundanzgruppe identisch sind, damit hierdurch eine identische Reihenfolge der Nachrichten in der gesamten Redundanzgruppe hergestellt wird. Beispielsweise können alle Nachrichten anhand der Größe eines ermittelten Hashwertes sortiert werden.

Gemäß einer Variante sind die oben erklärten Aspekte der Erfindung dadurch bestimmt, dass der Schritt h) (s.o.) als Unterzyklus ausgeführt wird, wobei
j) die Recheninstanzen jeder der Vielzahl N von Verarbeitungseinheiten die an sie adressierten Nachrichten empfangen,
k) anschließend die Nachrichten verarbeitet werden, wobei die bei der Verarbeitung neu erzeugten internen Nachrichten in mindestens einem Zwischenpuffer der Verarbeitungseinheit abgelegt werden,
l) anschließend, die im Schritt k) im Zwischenpuffer abgelegten Nachrichten unter Berücksichtigung von Sortierregeln, die für alle der betreffenden Vielzahl N von Verarbeitungseinheiten identisch sind, sortiert werden,
m) die Schritte j) und k) und l) wiederholt werden, wobei die Recheninstanzen an sie adressierte Nachrichten, die in vorhergehenden Schritten k) neu erstellt wurden, empfangen und verarbeiten, bis keine unbearbeiteten, an die Recheninstanzen adressierten, internen Nachrichten mehr im Zwischenpuffer vorliegen.

Die Maßnahme, die besagten Nachrichten in einem Zwischenpuffer abzuspeichern, kann vorteilhaft dafür genutzt werden, dass die Nachrichten, die wiederholt im Schritt k) abgelegt wurden, in einem zusammengefassten Schritt sortiert werden, bevor diese dem Voting zugeführt werden (Senden dieser Nachrichten an den Voter). Dies führt vorteilhaft zu einem weiteren Performancegewinn, da der Aufwand des Sortierens hierbei verringert wird. Dabei können die Nachrichten während der Verarbeitung durch die genannten Recheninstanzen ohne Synchronisierung derselben, d. h. in einer nicht deterministischen Reihenfolge abgearbeitet werden. Hierbei durchlaufen alle Recheninstanzen mindestens eine, meist jedoch mehrere Rekursionsschleifen, die dazu führen, dass am Ende alle zu verarbeitenden Nachrichten berücksichtigt wurden. Werden die dann verbleibenden, nicht weiter zu verarbeitenden Nachrichten sortiert, so kann das Gesamtergebnis durch den Voter verglichen werden, da dies unter der Voraussetzung, dass alle oder zumindest die Mehrheit der einzelnen Nachrichten je eine Nachricht mit identischem Nutzinhalt pro Recheninstanz aufweisen, ein positives Ergebnis des Votings erzeugt wird (d. h., dass der Prozess weitergeführt werden kann).

Gemäß einer Variante sind die oben erklärten Aspekte der Erfindung dadurch bestimmt, dass das Voting in einer externen Recheninstanz durchgeführt wird, die keiner der Vielzahl N von Redundanzgruppen angehört.

Ist im Zusammenhang mit dieser Erfindung von einer externen Recheninstanz die Rede, so ist das dahingehend zu verstehen, dass dieser Recheninstanz keiner der Vielzahl von Verarbeitungseinheiten angehört, die die voneinander unabhängig rechnenden Recheninstanzen zur redundanten Verarbeitung von Nachrichten beispielsweise eines redundant ausgeführten Applikationsprogramms enthalten. Dies bedeutet nicht, dass die externe Recheninstanz auf einem anderen Computer oder Prozessor oder Rechenkern ausgebildet sein muss (d. h., es ist keine hardwaremäßige Trennung erforderlich), eine softwaremäßige Trennung durch Definition von Redundanzgruppen und ein damit verbundenes Nachrichten-Management beispielsweise nach einem Publish-Subscribe-Verfahren ist ausreichend. Auch kann die Recheninstanz beispielsweise in einer anderen Redundanzgruppe von Recheninstanzen enthalten sein, in der keine Recheninstanzen an der Berechnung der Vielzahl N von Ergebnissen, die dem Voting zugeführt werden sollen, enthalten ist.

Wenn das Voting in einer bezüglich der betreffenden Verarbeitungseinheit externen Recheninstanz durchgeführt wird, sind die Nachrichten, die das zu vergleichende Gesamtergebnis betreffen, externe Nachrichten. Demgegenüber sind die Nachrichten, die zur redundanten Bearbeitung der jeweiligen Aufgaben erforderlich sind und zu diesem Zweck in die Redundanzgruppe übergeben werden bzw. während der Verarbeitung in der Redundanzgruppe erzeugt werden, als interne Nachrichten zu bezeichnen, da diese nicht einem (externen) Voting zugeführt werden müssen und deswegen auch nicht aus der die Redundanzgruppe bildenden Verarbeitungseinheit heraus gesendet werden müssen.

Gemäß einer Variante sind die oben erklärten Aspekte der Erfindung dadurch bestimmt, dass die Applikationsprogramme aus Nutzprogrammen, die auf die Durchführung des technischen Prozesses gerichtet sind, und Dienstprogrammen, die die Funktionen der Rechenumgebung unterstützen, bestehen.

Nutzprogramme sind mit anderen Worten diejenigen Applikationsprogramme, die den technischen Prozess unterstützen, auf dessen Durchführung das erfindungsgemäße Verfahren gerichtet ist (beispielsweise eine Bahnapplikation). Diese erzeugen mit anderen Worten Nachrichten, welche zur Abarbeitung des technischen Prozesses benötigt werden. Diese Nachrichten werden im Allgemeinen durch andere Applikationsprogramme des technischen Prozesses weiterverarbeitet. Der technische Prozess kann beispielsweise ein Verfahren zum Betrieb einer eisenbahntechnischen Infrastruktur sein. Die eisenbahntechnische Infrastruktur weist einerseits eine Gleisanlage mit Steuerelementen und Sensoren und andererseits Fahrzeuge mit Steuerelementen und Sensoren auf.

Als Dienstprogramme werden diejenigen Applikationsprogramme bezeichnet, die an der Durchführung des technischen Prozesses nicht direkt beteiligt sind, sondern lediglich die Funktion der Rechenumgebung selbst sicherstellen. Hierzu gehört beispielsweise der Voter, der lediglich die Funktionssicherheit der Rechenumgebung sicherstellt, jedoch keine Ergebnisse liefert, die als Nutzdaten in dem technischen Prozess Verwendung finden können.

Gemäß einer Variante sind die oben erklärten Aspekte der Erfindung dadurch bestimmt, dass alle Verarbeitungseinheiten, die Recheninstanzen einer Redundanzgruppe enthalten, jeweils auf einem anderen Prozessor oder zumindest jeweils auf einem anderen Rechenkern, vorzugsweise anderen Rechenkern desselben Prozessors, implementiert sind.

Sind Recheninstanzen einer Redundanzgruppe, und damit auch die Verarbeitungseinheiten, in denen die betreffende Recheninstanz angeordnet ist, auf jeweils anderen Rechenkernen desselben Prozessors untergebracht, so können die externen Nachrichten, die dem Voting unterzogen werden sollen, vorzugsweise an einen Voter gesendet werden, der auf demselben Prozessor aber vorzugsweise andern Rechenkernen als den durch die Verarbeitungseinheiten bzw. Recheninstanzen belegten implementiert ist. Dies führt vorteilhaft zu einer physikalischen Trennung der durch die verschiedenen Verarbeitungseinheiten parallel durchgeführten Prozesse und damit zu einer Verringerung von hardwarebedingten Fehlern. Außerdem werden dadurch die Verarbeitungsprozesse, die mit dem Voting verbunden sind, in demselben Prozessor durchgeführt, was außerdem vorteilhaft zu einem Performancegewinn führt.

Gemäß einer Variante sind die oben erklärten Aspekte der Erfindung dadurch bestimmt, dass in mindestens einer der Verarbeitungseinheiten (vorzugsweise in allen Verarbeitungseinheiten mindestens einer Redundanzgruppe) mehrere Rechenkerne eines Prozessors zusammengefasst sind. Außerdem ist innerhalb der betreffenden Verarbeitungseinheit (vorzugsweise aller Verarbeitungseinheiten einer Redundanzgruppe) gemäß einer weiteren Ausgestaltung jedem Rechenkern nur eine der Recheninstanzen der Verarbeitungseinheit zugeordnet. Hierdurch laufen alle in der betreffenden Recheninstanz ablaufenden Verarbeitungsprozesse in ein und demselben Rechenkern ab, was die Funktionssicherheit erhöht und die Performance vorteilhaft weiter steigert.

Der mit der parallelen aber zeitlich unabhängigen Bearbeitung der Nachrichten in verschiedenen Verarbeitungseinheiten verbundene Performancegewinn fällt nämlich umso stärker aus, wenn man die Recheninstanzen einer derartigen Verarbeitungseinheit jeweils auf mehrere CPUs oder mehrere (virtuelle) Kerne zum Zwecke der parallelen und damit effektiveren Verarbeitung aufteilt (dies ist eine zentrale Motivation bei der Nutzung von MultiCore-Anwendungen).

In dieser vorteilhaften Ausprägung befinden sich alle Recheninstanzen einer Bubble auf Cores ein und derselben CPU. Die Vermittlungswege innerhalb einer Bubble sind damit sehr schnell und die Unabhängigkeit mehrerer Bubbles wird vorteilhafterweise durch die Verteilung zusammengehöriger Bubbles auf mehrere Server genutzt. Die Wirksamkeit der Summe dieser Maßnahmen lässt sich damit quantitativ auch hinreichend auf Bubbles mit vergleichsweise vielen Teileinheiten ("große" Bubbles) ausweiten.

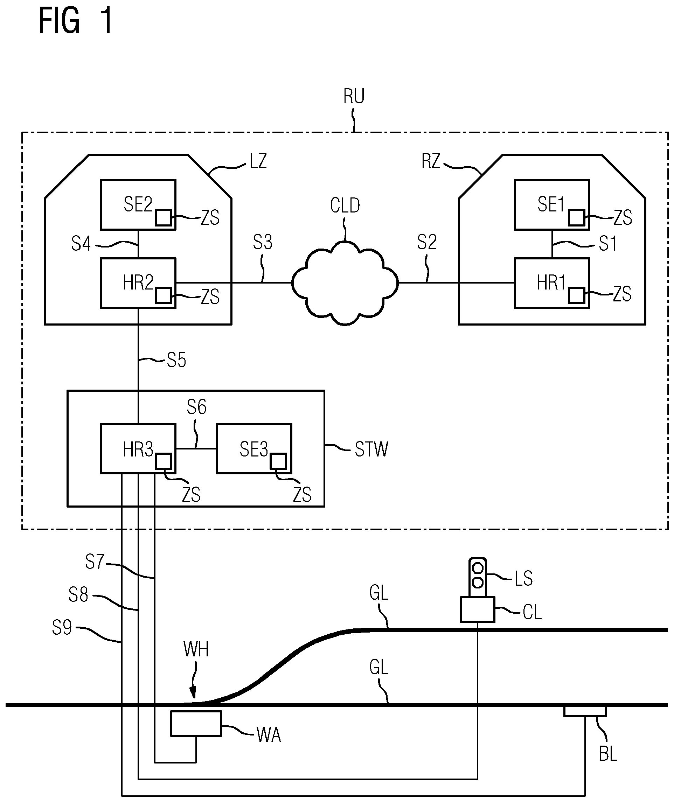

In einer vorteilhaften Ausprägung werden die einzelnen Einheiten des Systems für einen konkreten technischen Prozess wie den in Figur 1 dargestellten einer Bahnapplikation bzgl. ihres zu verarbeitenden Mengengerüsts - z.B. Größe des Perimeters eines Stellwerks (Anzahl Weichen, Gleise, Signale) - in Abhängigkeit der dafür erforderlichen funktionalen Verarbeitungen optimal auf eine Anzahl von Recheninstanzen verteilt, sodass sich die Arbeit in der Bubble gleichmäßig verteilt und zwar insbesondere dann, wenn die Arbeitslast über alle Teileinheiten hinweg ansteigt, also immer mehr Szenarien nahezu gleichzeitig parallel verarbeitet werden sollen. Konkret bedeutet dies, dass kein einzelner Teilschritt einer Teileinheit dermaßen überbordet, dass er für die vollständige Bearbeitung den gesamten Bubble-Arbeitszyklus benötigt oder sogar einen weiteren Bubble-Arbeitszyklus erzwingt. Somit kann es gelingen, dass genau bei und trotz des Anstiegs der Arbeitslast über alle Verarbeitungseinheiten hinweg, die Gesamtreaktionszeiten mehrerer parallel zu verarbeitenden Szenarien jeweils stabil gehalten werden können und damit eine effektive Skalierung gelingt.

In einer weiteren vorteilhaften Ausprägung lässt sich der vorgeschlagene Ansatz nicht nur auf Skalierung durch Verteilung bzgl. des Mengengerüsts, sondern auch auf Skalierung durch Verteilung bzgl. der Funktionalität an sich ausweiten bzw. bzgl. beider Aspekte nahezu beliebig kombinieren und forcieren. Dies schließt auch die Aufteilung einer ursprünglich monolithischen Arbeitseinheit mit ein. Konkret bedeutet dies, dass für ursprünglich monolithischen Arbeitseinheiten überhaupt erstmals eine Parallelisierung und effektive und deterministische Multicore-Nutzung möglich wird, welche auf herkömmlichen Systemen bisher verwehrt war.

Gemäß einer Variante sind die oben erklärten Aspekte der Erfindung dadurch bestimmt, dass die als Voter eingerichtete Recheninstanz als externe Recheninstanz keiner Redundanzgruppe angehört, aus der Nachrichten für das Voting zu empfangen diese eingerichtet ist.

Die Ausbildung des Voters als externe Recheninstanz bewirkt vorteilhaft, dass alle Nachrichten, die für das Voting durch die redundante Recheninstanzen zur Verfügung gestellt werden, als externe Nachrichten aus der Redundanzgruppe herausgeschickt werden müssen. Hierdurch lässt sich eine Trennung der Verarbeitungsprozesse, die die zu vergleichenden Nachrichten erzeugen, und des anschließenden Votings erreichen, wodurch das erfindungsgemäße Verfahren mit einer höheren Fehlersicherheit durchgeführt werden kann.

Gemäß einer Variante sind die oben erklärten Aspekte der Erfindung dadurch bestimmt, dass diese mehrere Voter aufweist.

Der Einsatz mehrerer Voter führt vorteilhaft zu einem Performancegewinn bei der Ausführung des erfindungsgemäßen Verfahrens. Dies ist damit zu begründen, dass für den Fall, dass in kurzer Abfolge mehrere Redundanzgruppen Ergebnisse für das Voting senden, diese seriell abgearbeitet werden müssten, wenn nur ein Voter zu Verfügung stünde. Bei mehreren Votern lässt sich der Prozess des Votings aber parallelisieren.

Exemplarische Ausführungsbeispiele der Zeichnung Weitere Einzelheiten der Erfindung werden nachfolgend anhand der Zeichnung beschrieben. Gleiche oder sich entsprechende Zeichnungselemente sind in den einzelnen Figuren jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Varianten der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Komponenten auch mit den vorstehend beschriebenen Varianten der Erfindung kombinierbar.

Figur 1 zeigt ein Ausführungsbeispiel der erfindungsgemäßen Vorrichtung mit ihren Wirkzusammenhängen schematisch. Figur 2 zeigt ein Ausführungsbeispiel einer Rechenumgebung für die Vorrichtung gemäß Figur 1 als Blockschaltbild, wobei die einzelnen Recheninstanzen Programmmodule ausführen, die jeweils in einem oder mehreren der beispielhaft dargestellten Computer ablaufen können und wobei die gezeigten Schnittstellen demgemäß softwaretechnisch in einem Computer oder hardwaretechnisch zwischen verschiedenen Computern ausgeführt sein können.

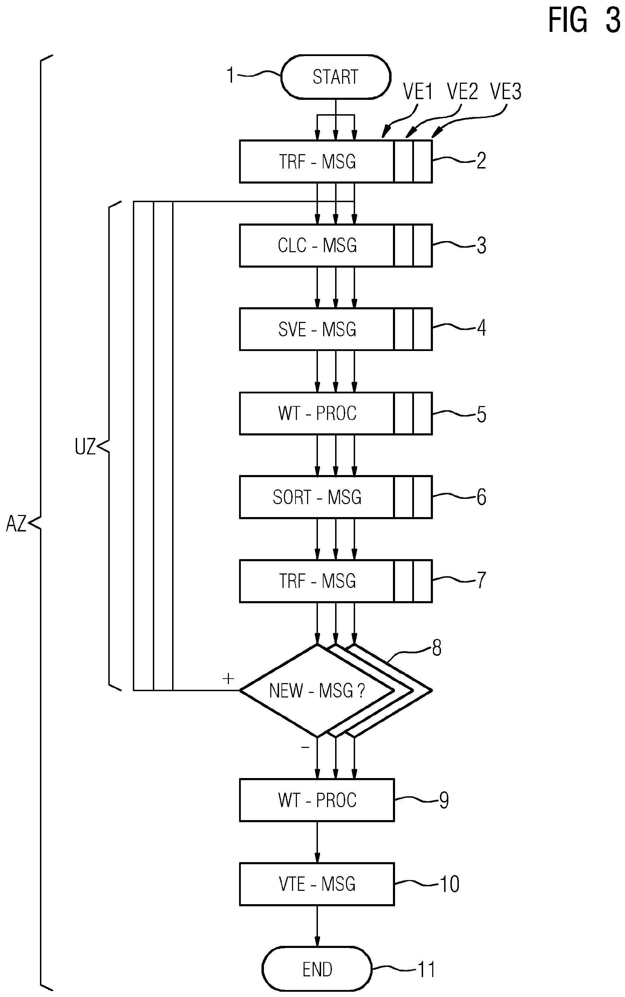

Figur 3 zeigt ein Ausführungsbeispiel des erfindungsgemäßen Verfahrens als Flussdiagramm, wobei die gezeigten Verfahrensschritte einzeln oder in Gruppen durch Programmmodule verwirklicht sein können und wobei die Recheninstanzen und Schnittstellen gemäß Figur 2 beispielhaft angedeutet sind.

Figur 4 stellt den Verfahrensablauf gemäß Figur 3 an einem Zeitstrahl dar, wobei die Verarbeitungsvorgänge und die erzeugten Nachrichten der ersten Verarbeitungseinheit und der zweiten Verarbeitungseinheit gemäß Figur 3 exemplarisch dargestellt sind (auf die dritten Verarbeitungseinheit wird aus Gründen der Übersichtlichkeit verzichtet)

### Detaillierte Beschreibung der Zeichnung

In Figur 1 ist schematisch eine Bahnanwendung dargestellt, welche durch eine Rechenumgebung RU gesteuert wird. Die Bahnanwendung weist Gleise GL auf, an denen verschiedene Komponenten der Stellwerkstechnik exemplarisch dargestellt sind. Hierbei handelt es sich um einen Weichenantrieb WA, der eine Weiche WH stellen kann. Weiterhin ist eine Balise BL in einem der Gleise GL verbaut, mit deren Hilfe Informationen mit die Balise BL überfahrenden Zügen ausgetauscht werden können. Zuletzt ist ein Lichtsignal LS dargestellt, welches durch einen Controller CL gesteuert wird.

Die Rechnerumgebung RU kann verschiedene Hostrechner, nämlich einen ersten Hostrechner HR1, einen zweiten Hostrechner HR2 und einen dritten Hostrechner HR3 aufweisen, auf die Applikationen zum Steuern der Bahnanwendung in Form von Applikationsprogrammen (hierzu im Folgenden noch mehr) verteilt sind. Der erste Hostrechner HR1 wird durch ein Rechenzentrum RZ zur Verfügung gestellt und ist über eine erste Schnittstelle S1 mit einer ersten Speichereinheit SE1 verbunden. Das Rechenzentrum RZ kann beispielsweise durch einen Dienstleister des Bahnbetreibers oder durch den Bahnbetreiber selbst betrieben werden. Über eine zweite Schnittstelle S2 ist der erste Hostrechner HR1 mit einer privaten Cloud CLD verbunden, sodass dieser örtlich nicht an die Bahnanwendung gebunden ist. Bei der Cloud CLD kann es sich um eine private Cloud CLD handeln, wobei darunter eine Cloud CLD zu verstehen ist, bei der der Zugriff auf autorisierte Nutzer beschränkt ist.

Eine Leitzentrale LZ des Bahnbetreibers beherbergt den zweiten Hostrechner HR2, der über eine dritte Schnittstelle S3 ebenfalls mit der Cloud CLD verbunden ist. Außerdem ist der zweite Hostrechner HR2 über eine vierte Schnittstelle S4 mit einer zweiten Speichereinheit SE2 verbunden.

Die Rechnerumgebung RU weist außerdem exemplarisch ein Stellwerk STW auf, welches den dritten Hostrechner HR3 beherbergt, der über eine sechste Schnittstelle S6 mit einer dritten Speichereinheit SE3 verbunden ist. Außerdem weist der dritte Hostrechner HR3 eine fünfte Schnittstelle S5 zum zweiten Hostrechner HR2 auf. In nicht dargestellter Weise könnte der dritte Hostrechner HR3 auch mit der Cloud CLD verbunden sein. Der dritte Hostrechner HR3 weist außerdem eine siebte Schnittstelle S7 zum Weichenantrieb WA, eine achte Schnittstelle S8 zu dem Controller CL und eine neunte Schnittstelle S9 zu der Balise BL auf.

Alle Schnittstellen S1 ... S9 gemäß Figur 1 sind grundsätzlich kabelgebunden oder auch durch eine kabellose Übertragungstechnik, beispielsweise Funk, realisierbar. Die Anordnung der Hostrechner HR1 ... HR3 ist lediglich exemplarisch und kann bei komplexeren Bahnanlagen beliebig erweitert werden. Eine Rechenumgebung RU wird dadurch definiert, dass die beteiligten Hostrechner HR1 ... HR3 untereinander kommunizieren können und dadurch die Applikationen unter Berücksichtigung verfügbarer Rechenkapazitäten verteilt auf den Hostrechner HR1 ... HR3 abgearbeitet werden können. Hierzu werden nicht näher dargestellte Recheninstanzen RP gebildet, die im Folgenden noch näher beschrieben werden (vergleiche Figur 2 wo die Recheninstanzen RP dargestellt sind).

Außerdem sind in Figur 1 verschiedene Zwischenspeicher ZS dargestellt, deren Funktion im Folgenden noch näher erläutert wird. Die Zwischenspeicher ZS können entweder Teil der Hostrechner sein (beispielsweise im Arbeitsspeicher der Hostrechner implementiert sein) oder Teil der Speichereinrichtungen sein.

Ein Ansatz einer ausschließlich softwarebasierten Plattform, auch Distributed Smart Safe System oder kurz DS3 genannt verfolgt gemäß dem Stand der Technik, wie in Figur 2 oben dargestellt, die Umsetzung von Mechanismen für die funktionale Sicherheit unter ausschließlicher Nutzung von COTS-Hardware. Das Verfahren zur Synchronisation und Beherrschung des Determinismus für den Vergleich der an sich unabhängigen Arbeitsergebnisse beruht hier im Kern auf einem strikten zeitlichen Zyklus für die Abfolge von Arbeitstakt und Vergleichstakt VT, der sich aufgrund des im Vergleich zur HW-Synchronisation und zum HW-Vergleich weitaus höheren Rechenaufwands für den Vergleichstakt VT nicht auf beliebig kurze Zyklen takten lässt, sodass aktuell z. B. die in Figur 2 angedeuteten 100 ms eine realistische Zyklusdauer darstellen.

In Figur 2 ist dies für fünf Teileinheiten mit jeweils 3 unabhängigen Recheninstanzen RP, die jeweils eine Redundanzgruppe GR bilden, dargestellt - inkl. Voter V als Vergleicher und Gateway GW zur Entkopplung der Kommunikation zu anderen Subsystemen SB wie zum Beispiel den anderen Teileinheiten. Der Vergleich erfolgt pro Teileinheit A, B, C, D, E (unabhängig davon, welchem Hostrechner HR1 ... HR3, angedeutet durch Strichpunktlinien, diese Teileinheiten zugeordnet sind) über den der jeweiligen Teileinheit zugeordneten Voter V. Im Falle des Beispiels einer Simis W genannten Anlage sind als Recheninstanzen also ein Schnittstellencomputer IIC für Streckenelemente (auch Interlocking Interface Component, kurz IIC genannt), auf dem vorrangig Dienstprogramme ausgeführt werden, und mehrere Applikationscontroller AC1... AC4 (auch Area Component genannt) zur Abarbeitung der Nutzprogramme vorgesehen. Die Recheninstanzen sind untereinander mit Verbindungslinien verbunden, die Kommunikationsverbindungen zwischen den Recheninstanzen darstellen.

Die Abarbeitung in dem strikten Vergleichstakten erfolgt jedoch unabhängig davon, ob in einem Vergleichstakt im Arbeitstakt nun sehr wenig oder sehr viel zu verarbeiten war, wodurch zwangsläufig Leerlaufzeiten bei den Recheninstanzen RP entstehen. Ist bei einer Teileinheit wenig zu rechnen und gleichzeitig aber auch die schnelle Abfolge mehrerer solcher Tätigkeiten sequenziell erforderlich für eine vollständige Verarbeitung im Verbund der Teileinheiten, so wird die gesamte Verarbeitung stark verzögert, da ein Weitervermitteln immer nur nach einem vollständigen Vergleichstakt (vgl. Figur 4, unten) möglich ist. Als Folge davon werden zwar die gewünschten Eigenschaften bzgl. funktionaler Sicherheit hinreichend erfüllt, aber wegen der Reaktionszeiten einzelner Verarbeitungen geht dies auf Kosten der Performance.

Dieselben fünf Recheninstanzen RP mit ihren jeweils 3 unabhängigen Verarbeitungseinheiten VE1 ... VE3 können nun im Sinne der Erfindung neu in drei unabhängig arbeitende Verarbeitungseinheiten VE1 ... VE3, dargestellt als Bubbles, geclustert werden, allerdings nur in Verbindung mit einer Vorschaltung eines Voters V als Vergleicher und einem Gateway GW zur Entkopplung der Kommunikation zu anderen oder Nachbarsystemen, die vorzugsweise auch als Bubbles (nicht dargestellt) organisiert sein können. Die Bubbles stellen dabei die logischen Verarbeitungseinheiten VE1 ... VE3 dar, jedoch keine hardwarebasierten Grenzen. Allerdings ist es vorteilhaft, Recheninstanzen RP einer Redundanzgruppe GR jeweils auf unterschiedlichen (virtuellen) Rechenkernen oder Prozessoren unterzubringen. Für die zweite Verarbeitungseinheit VE2 ist die Umgruppierung je einer Recheninstanz RP aus jeder Teileinheit A ... E exemplarisch durch einen gestrichelten Pfeil dargestellt, für die erste Verarbeitungseinheit VE1 und die dritte Verarbeitungseinheit VE3 läuft das genauso ab.

Die Clusterung als Bubble bei physikalischer Entkopplung der drei Redundanzgruppen GR entspricht dem oben beschriebenen Paradigmenwechsel und stellt mit den einhergehenden Eigenschaften und Vorteilen, einer asynchronen und parallelen Verarbeitung zur effektiven Nutzung mehrerer Rechenkerne (Multi-Core) in der betreffenden Bubble, eine vorteilhafte Nutzung dar.

Außerdem ist zu erkennen, dass nur für externe Nachrichten, welche die Bubble verlassen, der Vergleich vor dem Senden stattfindet. Hierfür ist ein Zyklus von 100 ms vorgesehen. Außerdem besteht die Möglichkeit, Voter V und Gateway GW mehrfach vorzusehen (nicht dargestellt), um durch eine Parallelisierung die Skalierbarkeit und Effektivität des entstehenden Multicore-Systems weiter auszureizen.

Zur Beherrschung des für die oben beschriebene Lösung unerlässlichen Determinismus während der asynchronen und parallelen Verarbeitung in den Bubble selbst wird statt des ursprünglichen sicheren Vergleichs und strikten Vergleichstakt in jeder Redundanzgruppe GR nun in jeder Bubble unabhängig, aber nach identischen Kriterien für alle Bubbles, ein zwischen den Recheninstanzen RP (als Bubble-Teilnehmer) der folgende Algorithmus zur Sortierung und Flusskontrolle durchgeführt, der in Figur 3 dargestellt ist.
Schritt 1 (kurz START): Beginn des (übergeordneten) Arbeitszyklus AZ
Schritt 2 (kurz TRF-MSG): Übergabe aller vorhandenen Eingangsnachrichten an die zugehörigen (adressierten) Recheninstanzen RP in der Verarbeitungseinheit VE1 ... VE3 (Bubble) zur asynchronen und parallelen Verarbeitung durch die Recheninstanzen RP.
   Diese Eingangsnachrichten wurden während des letzten Bearbeitungszyklus empfangen und bis zur Übergabe an den aktuellen Bearbeitungszyklus extern zwischengespeichert. Die Eingangsnachrichten definieren somit das Arbeitspaket für den aktuellen Bearbeitungszyklus. Menge und Reihenfolge der Eingangsnachrichten sind für alle Verarbeitungseinheiten VE1 ... VE3 (Bubbles) identisch.
Schritt 3 (kurz CLC-MSG): Asynchrone und parallele Verarbeitung aller übergebenen internen Nachrichten durch die Recheninstanzen RP. Jede Recheninstanz RP läuft eigenständig, im Zuge dieser Verarbeitung kann jede Recheninstanz RP neue Nachrichten erzeugen. Hierbei kann es sich um interne Nachrichten an andere Recheninstanzen RP (innerhalb derselben Bubble) oder um externe Nachrichten an andere, externe Subsysteme SB handeln.
Schritt 4 (kurz SVE-MSG): Eine Zwischenpufferung neu erzeugter Nachrichten ist erforderlich. Neu erzeugte Nachrichten innerhalb einer Bubble, sowohl interne Nachrichten für weitere Recheninstanzen RP in der Bubble als auch externe Nachrichten für externe Subsysteme SB werden vorerst zwischengepuffert und nicht direkt zur Bearbeitung weitergereicht. Dieses Zwischenpuffern ist deshalb notwendig, damit die Nachrichten später einheitlich für alle Bubbles und den oder die Voter V auf gleiche Weise (per Konfiguration, also nach deterministischen Sortierregeln) sortiert werden können, siehe Schritt 6.
Schritt 5 (kurz WT-PROC): Warten, bis alle Recheninstanzen RP ihre Nachrichten-Bearbeitung abgeschlossen haben. Erst dann, wenn alle Recheninstanzen RP der Bubble fertig sind, ist eine konsistente Gesamtmenge der erzeugten neuen Nachrichten in jeder Bubble vollständig verfügbar. Dies ist Voraussetzung für die einheitliche Anwendbarkeit der Sortierregeln.
Schritt 6 (kurz SORT-MSG): Sortierung aller zwischengepufferten neuen Nachrichten gemäß festgelegter Konfiguration für die Recheninstanzen RP. Diese Konfiguration ist für alle Bubbles identisch und bestimmt eine einheitliche Bearbeitungsreihenfolge der neuen Nachrichten und damit insbesondere in noch folgenden Schritten auch einheitliche Ergebnisse. Dies ist das zentrale Merkmal zur Beherrschung des deterministischen Verhaltens in allen beteiligten Bubbles.
Schritt 7 (kurz TRF-MSG): Übergabe aller zwischengepufferten und sortierten Nachrichten zur weiteren asynchronen und parallelen Bearbeitung an die Recheninstanzen RP innerhalb der Bubble (interne Nachrichten) und gegebenenfalls zum Voter V außerhalb der Bubble (externe Nachrichten; diese Übergabe kann aber auch im Anschluss an Schritt 9 für alle erzeugten Nachrichten zusammen erfolgen, wenn die externen Nachrichten bis dahin in der Bubble zwischengespeichert werden).
Schritt 8 (kurz NEW-MSG?) nach Abfrage: Erneut asynchrone und parallele Verarbeitung in einem Unterzyklus UZ (Rekursion, siehe Punkt 3) sofern noch (neue) sortierte interne Nachrichten an die Recheninstanzen RP vorliegen.
Schritt 9 (kurz WT-PROC): Erreichen des Wartepunkts der Bubble sofern keine weiteren sortierten internen Nachrichten an die Recheninstanzen RP vorliegen.
Schritt 10 (kurz VTE-MSG): Der übergeordnete Bubble-Arbeitszyklus ist in allen Bubbles abgeschlossen, in dem Sinne, dass jeweils alle Arbeitsergebnisse in Form der externen Nachrichten berechnet wurden. Dieser Arbeitszyklus wird, wie in Figur 2 dargestellt, parallel in drei Bubbles redundant ausgeführt, was in Figur 3 dadurch angedeutet ist, dass die Elemente des Flussdiagramms jeweils doppelt überlagert dargestellt sind (sozusagen 2 Schatten haben) und jeweils drei parallele Flusspfeile dargestellt sind. Dies bedeutet jedoch nicht, dass die Prozesse in den 3 Bubbles synchron verlaufen. Es bedeutet lediglich, dass alle Bubbles beim beschriebenen Schritt 9 angekommen sein müssen, bevor mit dem Schritt 10 begonnen werden kann. Nun muss noch ein Vergleichen der externen Nachrichten erfolgen, die sich durch die Anwendung der Sortierregeln deterministisch verhalten und daher identisch sein müssen. Die externen Nachrichten aus allen Bubbles werden zum Zwecke des Vergleiches an den Voter V übergeben und das Voting durchgeführt. Bei einem positiven Voting-Ergebnis werden die externen Nachrichten über das Gateway GW externen Subsystemen SB zur Verfügung gestellt (vgl. Figur 2).
Schritt 11 (kurz END): der (übergeordnete) Arbeitszyklus wird beendet. Ein nachfolgender Arbeitszyklus AZ kann mit Schritt 1 gestartet werden.

In Figur 4 ist der erfindungsgemäße Verfahrensablauf gemäß Figur 3 auf einer Zeitachse ZA dargestellt. Hierbei sind lediglich die erste Verarbeitungseinheit VE1 und die zweite Verarbeitungseinheit VE2 zu erkennen. Die im Folgenden erläuterten Mechanismen gelten für die dritte Verarbeitungseinheit VE3 allerdings in gleicher Weise. Diese ist lediglich der Übersichtlichkeit halber weggelassen worden.

Außerhalb der ersten Verarbeitungseinheit VE1 und der zweiten Verarbeitungseinheit VE2 ist ein Zwischenspeicher ZS als Sendepuffer vorgesehen, der exemplarisch vier Speicherplätze für Nachrichten zur Verfügung stellt. Diese Nachrichten werden nachfolgend 1a, 2a, 3a und 4a genannt. Werden aus diesen anfänglichen Nachrichten durch Abarbeiten von Applikationsprogrammen in den Recheninstanzen RP neue Nachrichten generiert, so werden diese jeweils mit dem nachfolgenden Buchstaben bezeichnet, also 1b, 2b, 3b und 4b usw. Das Zustandekommen dieser Nachrichten ist in Figur 4 bezüglich der Zeitachse ZA maßstabsgerecht dargestellt. Auch in der ersten Verarbeitungseinheit VE1 und in der zweiten Verarbeitungseinheit VE2 ist ein Zwischenspeicher ZS vorgesehen, der aufgrund des zeitlichen Verlaufs innerhalb dieser Verarbeitungseinheit zweimal dargestellt ist. Es handelt sich jedoch jeweils um denselben Zwischenspeicher ZS.

Aus dem als Sendepuffer ausgeführten Zwischenspeicher ZS werden 1a, 2a, 3a, 4a als externe Nachrichten parallel in die erste Verarbeitungseinheit VE1 und die zweite Verarbeitungseinheit VE2 übergeben. Dort werden sie auf die Recheninstanzen RP verteilt, wobei diese aus den zu Figur 2 bereits beschriebenen AC1, AC2 und AC3 bestehen. Es ist in den Recheninstanzen RP anhand von Fortschrittsbalken dargestellt, wann die betreffenden Nachrichten verarbeitet werden. Die Verarbeitung der Nachrichten zieht die Generierung von neuen Nachrichten nach sich. Im Falle von AC1 sind das 1b, 4b und 4c und im Falle von AC3 sind es 2b, 3b, 3c. Diese Nachrichten werden in den in der ersten Verarbeitungseinrichtung und der zweiten Verarbeitungseinrichtung angeordneten Zwischenspeichern ZS abgelegt. AC2 werden vorläufig keine Aufgaben hinsichtlich der Verarbeitung von Nachrichten zugeordnet.

Wenn 1a, 2a, 3a und 4a abgearbeitet wurden, stehen keine Nachrichten zur Bearbeitung mehr an. Die Bearbeitung der Nachrichten in der ersten Verarbeitungseinheit VE1 und der zweiten Verarbeitungseinheit VE2 erfolgten parallel, wobei in der ersten Verarbeitungseinheit VE1 ein Jitter aufgetreten ist, der die Verarbeitung verzögert hat. In Figur 4 kann erkannt werden, dass daher in der ersten Verarbeitungseinheit VE1 3b nach 4b und 3c nach 4c erzeugt wurden, während in der zweiten Verarbeitungseinheit VE2 die genannten Nachrichten jeweils annähernd gleichzeitig erzeugt wurden. Auf den geplanten Vergleich der Nachrichten hat dies jedoch keine Auswirkungen, weil die in dem Zwischenspeicher ZS abgespeicherten Nachrichten vor einem Vergleich nach Sortierregeln in nicht näher dargestellter Weise sortiert werden. Dies führt dazu, dass die neuen externen Nachrichten aus der ersten Verarbeitungseinheit VE1 und der zweiten Verarbeitungseinheit VE2 heraus gesendet werden sollen, nämlich 2b, 3b und 4b, und zwar zu unterschiedlichen Zeitpunkten, jedoch in derselben Reihenfolge den Voter V erreichen. Daher wird das Ergebnis des Votings positiv ausfallen, soweit diese Nachrichten identisch sind, da sie in derselben Reihenfolge geprüft werden.

Die neu erzeugten Nachrichten, die intern sind, nämlich 1b, 4c und 3c, werden anschließend in AC2 verarbeitet und führen zur Erzeugung der neuen Nachrichten 1c, 4d und 3d. Auch diese Nachrichten werden diesmal in der zweiten Verarbeitungseinheit VE2 durch den dort auftretenden Jitter später erzeugt als in der ersten Verarbeitungseinheit VE1. Jedoch werden diese Nachrichten ebenfalls im Zwischenspeicher ZS abgespeichert und erst nach Bearbeitung aller internen Nachrichten sortiert. Im Voter V werden daher die Nachrichten in der Reihenfolge 1c, 3d und 4d verglichen und deren Übereinstimmung festgestellt. Anschließend liegen keine neuen Nachrichten mehr vor, da alle neu erzeugten Nachrichten extern waren. Der Arbeitszyklus AZ ist damit abgeschlossen.

Exemplarisch sind die angewandten Sortierregeln entsprechend dem Index der Nachrichten gewählt. Es wird zunächst nach den arabischen Zahlen und dann nach den folgenden Buchstaben sortiert. Dies Sortierregeln sind lediglich zur Verdeutlichung des Sortiermechanismus gewählt worden. Die Sortierregeln in der Realität orientieren sich vorzugsweise an den Inhalten der Nachrichten bzw. Hashwerten, die unter Berücksichtigung des Inhaltes der Nachrichten erstellt werden.

Zur Verdeutlichung des Vorteils gegenüber dem Stand der Technik ist im unteren Teil der Figur 4 ein Prozess, wie dieser vorstehend schon als bekannt beschrieben wurde, dargestellt. Hierbei kommen zwei Pfeile PF zum Einsatz, die zwei Arbeitszyklen gemäß dem Stand der Technik darstellen sollen. Diese Darstellung ist jedoch im Unterschied zu der vorstehend erläuterten Darstellung anhand der Zeitachse ZA nicht maßstabsgerecht, sondern soll lediglich den Unterschied verdeutlichen. Es wird deutlich, dass zur Abarbeitung des Prozesses zwei Vergleichstakte VT zu je 100 ms erforderlich sind und somit gemäß dem Ausführungsbeispiel die doppelte Bearbeitungszeit erforderlich ist (in der Realität wirkt sich der Effekt sogar um ein Vielfaches aus). Jeder Vergleichstakt VT muss darauf warten, dass auch in jeder der Recheninstanzen RP die letzte verfügbare Nachricht verarbeitet wurde. Da ein Vergleich in nicht dargestellter Weise immer nur zwischen den Arbeitsergebnissen der jeweiligen Recheninstanz RP erfolgt, ist die Reihenfolge der Arbeitsergebnisse auch bei Auftreten eines Jitters deterministisch und führt daher zu positiven Resultaten beim Voting. Dafür müssen die Arbeitsergebnisse in Form neuer Nachrichten für jede Recheninstanz RP einer nicht näher dargestellten Redundanzgruppe GR vollständig vorliegen. Die Teileinheiten werden dabei jeweils durch eine Redundanzgruppe GR von Recheneinheiten gebildet.

Der Aufwand für den oben dargelegten Mechanismus zur Herstellung und Gewährleistung des notwendigen Determinismus in allen beteiligten Bubbles verschiebt sich in diesem Beispiel zwar zum Teil von mehreren Vergleichstakten VT hin zu einem einzigen Arbeitszyklus AZ und benötigt dort Ressourcen, welche aber aufgrund der Verteilung der Recheninstanzen RP auf mehrere Cores an sich zur Verfügung stehen und im Ansatz mit mehreren Vergleichstakten VT aufgrund der kaum ausgelasteten mehrfachen Arbeitsphasen ungenutzt waren. Zudem ist dieser Aufwand insofern geringer, dass er nicht funktional sicher ausgeführt werden muss und daher unabhängig und effizient in jeder einzelnen Bubble abgearbeitet werden kann. Dass dem so ist und dass die Offenbarung von Fehlern implizit dem abschließenden Vergleich durch den Voter V obliegen, stellt einen weiteren Vorteil dar.

In einer weiteren vorteilhaften Ausprägung lassen sich die Möglichkeiten zur Konfiguration des Algorithmus zur Sortierung und Flusskontrolle mittels Prioritäten, separaten Zwischenspeichern ZS als Sendepuffern an konfigurierte Empfänger, separaten Zwischenspeichern ZS als Empfangspuffern von konfigurierten Sendern, etc. ausweiten und verfeinern, sodass das Arbeitsverhalten einer Bubble entsprechend den dynamischen Charakteristika dieser, abhängig von der Art und Weise wie die Recheninstanzen RP jeweils zusammenarbeiten, optimal gestaltet werden kann.

### Bezugszeichenliste

- AC1... AC4: Applikationscontroller
- AZ: Arbeitszyklus
- BL: Balise
- CL: Controller
- CLD: Cloud
- GL: Gleise
- GR: Redundanzgruppe
- GW: Gateway
- HR1: erster Hostrechner
- HR2: zweiter Hostrechner
- HR3: dritter Hostrechner
- IIC: Schnittstellencomputer
- LS: Lichtsignal
- LZ: Leitzentrale
- PF: Pfeile
- RP: Recheninstanz
- RU: Rechenumgebung
- RZ: Rechenzentrum
- S1: erste Schnittstelle
- S2: zweite Schnittstelle
- S3: dritte Schnittstelle
- S4: vierte Schnittstelle
- S5: fünfte Schnittstelle
- S6: sechste Schnittstelle
- S7: siebte Schnittstelle
- S8: achte Schnittstelle
- S9: neunte Schnittstelle
- SB: Subsystem
- SE1: erste Speichereinheit
- SE2: zweite Speichereinheit
- SE3: dritte Speichereinheit
- STW: Stellwerk
- UZ: Unterzyklus
- V: Voter
- VE1 ... VE3: Verarbeitungseinheit
- VT: Vergleichstakt
- WA: Weichenantrieb
- WH: Weiche
- ZA: Zeitachse
- ZS: Zwischenspeicher

## Patentansprüche

1. Verfahren zum rechnergestützten Durchführen eines technischen Prozesses,
a)
bei dem Applikationsprogramme in einer Redundanzgruppe (GR), bestehend aus einer Vielzahl N von redundanten Recheninstanzen (RP), ausgeführt werden und dabei die Vielzahl N von redundanten Ergebnissen berechnen und
b)
anschließend bei einem Voting ein Vergleichen der Vielzahl N von die Ergebnisse enthaltenden Nachrichten durchgeführt wird, wobei
c)
in dem Fall, dass eine Mehrheit der Nachrichten identische Ergebnisse enthalten, die besagte Mehrheit von Nachrichten für das weitere Durchführen des technischen Prozesses verwendet wird,
**dadurch gekennzeichnet,**
**dass** Verarbeitungseinheiten (VE1 ... VE3) in der besagten Vielzahl N vorgesehen sind, wobei
d)
in jeder dieser Verarbeitungseinheiten (VE1 ... VE3) jeweils mehrere unterschiedliche Recheninstanzen (RP) zusammengefasst sind, wobei keine dieser Verarbeitungseinheiten (VE1 ... VE3) mehrere Recheninstanzen (RP) aus ein und derselben Redundanzgruppe (GR) enthält,
e)
die jeweils erzeugte Vielzahl N von redundanten Nachrichten bei dem Voting verglichen wird, wenn diese als externe Nachrichten an Recheninstanzen (RP), die nicht der Verarbeitungseinheiten (VE1 ... VE3) angehören, in der die Nachricht erzeugt wurde, versendet werden sollen,
f)
für Nachrichten, die als interne Nachrichten zwischen Recheninstanzen (RP) innerhalb einer Verarbeitungseinheit (VE1 ... VE3) ausgetauscht werden, kein Voting durchgeführt wird.

2. Verfahren zum rechnergestützten Durchführen nach Anspruch 1, **dadurch gekennzeichnet, dass** die Vielzahl von N Verarbeitungseinheiten (VE1 ... VE3) in Arbeitszyklen arbeitet, wobei
g)
zu Beginn jedes Arbeitszyklus (AZ) für den Arbeitszyklus (AZ) erforderliche, an die Recheninstanzen (RP) der betreffenden Verarbeitungseinheit (VE1 ... VE3) gerichtete Nachrichten an diese Verarbeitungseinheit (VE1 ... VE3) übergeben werden,
h)
anschließend alle für die Ausführung der Applikationsprogramme erforderlichen Nachrichten durch die Recheninstanzen (RP) in der Vielzahl N von Verarbeitungseinheiten (VE1 ... VE3) in identischer Reihenfolge verarbeitet werden, wobei neue redundante Nachrichten erzeugt werden,
i)
anschließend die neuen redundanten Nachrichten in den Schritten b), c), d) und e) gemäß Anspruch 1 miteinander verglichen werden.

3. Verfahren zum rechnergestützten Durchführen nach Anspruch 2, **dadurch gekennzeichnet, dass** der Schritt h) gemäß Anspruch 2 in Unterzyklen (UZ) ausgeführt wird, wobei
j)
die Recheninstanzen (RP) jeder der Vielzahl N von Verarbeitungseinheiten (VE1 ... VE3) die an sie adressierten Nachrichten empfangen,
k)
anschließend die Nachrichten verarbeitet werden, wobei die bei der Verarbeitung neu erzeugten internen Nachrichten in mindestens einem Zwischenpuffer der Verarbeitungseinheit (VE1 ... VE3) abgelegt werden,
l)
anschließend, die im Schritt k) im Zwischenpuffer abgelegten Nachrichten unter Berücksichtigung von Sortierregeln, die für alle der betreffenden Vielzahl N von Verarbeitungseinheiten (VE1 ... VE3) identisch sind, sortiert werden,
m)
die Schritte j) und k) und l) wiederholt werden, wobei die Recheninstanzen (RP) an sie adressierte Nachrichten, die in vorhergehenden Schritten k) neu erstellt wurden, empfangen und verarbeiten, bis keine unbearbeiteten, an die Recheninstanzen (RP) adressierten, internen Nachrichten mehr im Zwischenpuffer vorliegen.

4. Verfahren zum rechnergestützten Durchführen nach einem der vorhergehenden Ansprüche, **dadurch gekennzeichnet, dass** das Voting in einer Recheninstanz (RP) durchgeführt wird, die keiner der Vielzahl N von Redundanzgruppen (GR) angehört.

5. Verfahren zum rechnergestützten Durchführen nach einem der vorhergehenden Ansprüche, **dadurch gekennzeichnet, dass** die Applikationsprogramme aus Nutzprogrammen, die auf die Durchführung des technischen Prozesses gerichtet sind, und Dienstprogrammen, die die Funktionen der Rechenumgebung (RU) unterstützen, bestehen.

6. Verfahren zum rechnergestützten Durchführen nach einem der vorhergehenden Ansprüche, **dadurch gekennzeichnet, dass** alle Verarbeitungseinheiten (VE1 ... VE3), die Recheninstanzen (RP) einer Redundanzgruppe (GR) enthalten, jeweils auf einem anderen Prozessor oder zumindest jeweils auf einem anderen Rechenkern implementiert sind.

7. Rechenumgebung aufweisend mehrere Recheninstanzen (RP), wobei jeweils eine Vielzahl N von Recheninstanzen (RP) zu einer von mehreren Redundanzgruppen (GR) zusammengefasst sind und in jeder Redundanzgruppe (GR) alle Recheninstanzen (RP) dazu eingerichtet sind, ein Applikationsprogramm redundant auszuführen,
**dadurch gekennzeichnet,**
**dass** die Rechenumgebung (RU) in die besagte Vielzahl N von Verarbeitungseinheiten (VE1 ... VE3) aufgeteilt ist, wobei
n)
in jeder dieser Verarbeitungseinheiten (VE1 ... VE3) jeweils mehrere Recheninstanzen (RP) zusammengefasst sind,
o)
keine dieser Verarbeitungseinheiten (VE1 ... VE3) mehrere Recheninstanzen (RP) aus ein und derselben Redundanzgruppe (GR) enthält,
und **dass** die Rechenumgebung (RU) eine Recheninstanz (RP) aufweist, die eingerichtet ist,
p)
als Voter (V) bei einem Voting eine durch die Recheninstanzen (RP) erzeugte Vielzahl N von redundanten Nachrichten zu vergleichen, in dem Fall, dass diese als externe Nachrichten eine Verarbeitungseinheit (VE1 ... VE3) verlassen und
q)
Nachrichten nicht zu vergleichen, in dem Fall, dass diese als interne Nachrichten zwischen Recheninstanzen (RP) innerhalb der Verarbeitungseinheit (VE1 ... VE3) ausgetauscht werden.

8. Rechenumgebung nach Anspruch 7, **dadurch gekennzeichnet, dass** in mindestens einer der Verarbeitungseinheiten (VE1 ... VE3) mehrere Rechenkerne eines Prozessors zusammengefasst sind.

9. Rechenumgebung nach Anspruch 7 oder 8, **dadurch gekennzeichnet, dass** die als Voter (V) eingerichtete Recheninstanz (RP) als externe Recheninstanz (RP) keiner Redundanzgruppe (GR) angehört, aus der Nachrichten für das Voting zu empfangen diese eingerichtet ist.

10. Rechenumgebung nach einem der Ansprüche 7 bis 9, **dadurch gekennzeichnet, dass** diese mehrere Voter (V) aufweist.

11. Computerprogramm, umfassend Programmbefehle, die bei der Ausführung des Programms durch einen Computer diesen dazu veranlassen, das Verfahren nach einem der Ansprüche 1 - 6 auszuführen.

12. Speichermedium, welches durch einen Computer lesbar ist, auf dem das Computerprogrammprodukt nach dem letzten voranstehenden Anspruch gespeichert ist.

## Claims

1. Method for the computer-aided execution of a technical process,
a)
in which application programs are executed in a redundancy group (GR) consisting of a plurality N of redundant computing entities and thereby calculate the plurality N of redundant results, and
b)
a comparison of the plurality N of messages containing the results is then carried out in a voting, wherein
c)
in the event that a majority of the messages contain identical results said majority of messages is used for further execution of the technical process,
**characterised in that**,
processing units (VE1... VE3) are provided in said plurality N, wherein
d)
a plurality of different computing entities (RP) is combined in each of these processing units (VE1... VE3), wherein none of these processing units (VE1... VE3) contains a plurality of computing entities (RP) from one and the same redundancy group (GR),
e)
the respectively generated plurality N of redundant messages is compared in the voting if these are to be sent as external messages to computing entities (RP), which do not belong to the processing units (VE1... VE3), in which the message was generated,
f)
no voting is carried out for messages that are exchanged as internal messages between computing entities (RP) within a processing unit (VE1... VE3).

2. Method for the computer-aided execution according to claim 1, **characterised in that** the plurality of N processing units (VE1... VE3) operates in work cycles, wherein
g)
at the beginning of each work cycle (AZ), messages required for the work cycle (AZ) and addressed to the computing entities (RP) of the processing unit (VE1... VE3) concerned are transferred to this processing unit (VE1... VE3),
h)
subsequently, all messages required for the execution of the application programs are processed by the computing entities (RP) in the plurality N of processing units (VE1... VE3) in identical order, wherein new redundant messages are generated,
i)
the new redundant messages are then compared with each other in steps b), c), d) and e) in accordance with claim 1.

3. Method for the computer-aided execution according to claim 2, **characterised in that** the step h) in accordance with claim 2 is carried out in sub-cycles (UZ), wherein
j)
the computing entities (RP) of each of the plurality N of processing units (VE1... VE3) receive the messages addressed to them,
k)
the messages are then processed, with the new internal messages generated during processing being stored in at least one intermediate buffer of the processing unit (VE1... VE3),
1)
subsequently, the messages stored in the intermediate buffer in step k) are sorted taking into account sorting rules which are identical for all of the plurality N of processing units (VE1... VE3) concerned,
m)
steps j) and k) and l) are repeated, with the computing entities (RP) receiving and processing messages addressed to them that were newly created in previous step k), until there are no more unprocessed internal messages addressed to the computing entities (RP) in the intermediate buffer.

4. Method for computer-aided execution according to one of the preceding claims, **characterised in that** the voting is performed in a computing entity (RP) which does not belong to any of the plurality N of redundancy groups (GR).

5. Method for computer-aided execution according to one of the preceding claims, **characterised in that** the application programs consist of utility programs aimed at the execution of the technical process and service programs supporting the functions of the computing environment (RU).

6. Method for computer-aided execution according to one of the preceding claims, **characterised in that** all processing units (VE1... VE3) comprising computing entities (RP) of a redundancy group (GR) are each implemented on a different processor or at least each on a different computing core.

7. Computing environment having a plurality of computing entities (RP), wherein a plurality N of computing entities (RP) are combined to form one of a plurality of redundancy groups (GR) and all computing entities (RP) in each redundancy group (GR) are set up to execute an application program redundantly,
**characterised in that**,
the computing environment (RU) is divided into said plurality N of processing units (VE1... VE3), wherein
n)
a plurality of computing entities (RP) are combined in each of these processing units (VE1... VE3),
o)
none of these processing units (VE1... VE3) contains a plurality of computing entities (RP) from one and the same redundancy group (GR),
and that the computing environment (RU) has a computing entity (RP) that is set up,
p)
to compare as a voter (V) in a voting a plurality N of redundant messages generated by the computing entities (RP), in the event that these leave a processing unit (VE1... VE3) as external messages and
q)
not to compare messages in the event that these are exchanged as internal messages between computing entities (RP) within the processing unit (VE1... VE3).

8. Computing environment according to claim 7, **characterised in that** a plurality of computing cores of a processor are combined in at least one of the processing units (VE1... VE3).

9. Computing environment according claim 7 or 8, **characterised in that** the computing entity (RP) set up as a voter (V), as an external computing entity (RP) does not belong to a redundancy group (GR) from which it is set up to receive messages for voting.

10. Computing environment according to one of claims 7 to 9, **characterised in that** this has a plurality of voters (V).

11. Computer program comprising program commands which, when the program is executed by a computer, cause the computer to carry out the method according to one of claims 1 - 6.

12. Storage medium which can be read by a computer, on which the computer program product according to the final preceding claim is stored.

## Revendications

1. Procédé de mise en œuvre assistée par ordinateur d'un processus technique,
a)
dans lequel des programmes d'application, dans un groupe (GR) de redondance constitué d'une pluralité N d'instances (RP) redondantes de calcul, sont exécutés et ainsi la pluralité N de résultats redondants est calculée et
b)
ensuite, lors d'un voting, est effectuée une comparaison de messages contenant la pluralité N des résultats, dans lequel
c)
dans le cas où une majorité des messages contiennent des résultats identiques, ladite majorité des messages est utilisée pour continuer à effectuer le processus technique,
**caractérisé**
**en ce que** des unités (VE1 ... VE3) de traitement sont prévues dans ladite pluralité N, dans lequel
d)
dans chacune des unités (VE1 ... VE3) de traitement, respectivement plusieurs instances (RP) de calcul différentes sont rassemblées, dans lequel aucune de ces unités (VE1 ... VE3) de traitement ne contient plusieurs instances (RP) de calcul d'un seul et même groupe (GR) de redondances,
e)
la pluralité N produite respectivement de messages redondants est comparée lors du voting, si ceux-ci doivent être envoyés comme messages extérieurs à des instances (RP) de calcul, qui n'appartiennent pas aux unités (VE1 ... VE3) de traitement, dans laquelle le message a été produit,
f)
pour des messages qui sont échangés comme messages internes entre des instances (RP) de calcul au sein d'une unité (VE1 ... VE3) de traitement, on n'effectue par de voting.

2. Procédé de mise en œuvre assistée par ordinateur suivant la revendication 1, **caractérisé en ce que** la pluralité de N unités (VE1 ... VE3) de traitement travaillent en cycles de travail, dans lequel
g)
au début de chaque cycle (AZ) de travail, on transmet des messages nécessaires au cycle (AZ) de travail, portant sur les instances (RP) de calcul de l'unité (VE1 ... VE3) de traitement concernée, à cette unité (VE1 ... VE3) de traitement,
h)
ensuite tous les messages, nécessaires à la mise en œuvre du programme d'application, sont traités suivant une séquence identique par les instances (RP) de calcul dans la pluralité de N unités (VE1 ... VE3) de traitement, des messages redondants nouveaux étant produits,
i)
ensuite les messages redondants nouveaux sont comparés entre eux, dans les stades b), c), d) et e) de la revendication 1.

3. Procédé de mise en œuvre assistée par ordinateur suivant la revendication 2, **caractérisé en ce que** l'on met en œuvre le stade h) suivant la revendication 2 dans des sous-cycles (UZ), dans lequel
j)
les instances (RP) de calcul de chacune de la pluralité de N unités (VE1 ... VE3) de traitement reçoivent les messages, qui leur sont adressés,
k)
ensuite, les messages sont traités, dans lequel les messages internes, produits nouvellement lors du traitement, sont mis dans au moins un tampon intermédiaire de l'unité (VE1 ... VE3) de traitement,
l)
ensuite, les messages, mis dans le stade k) dans le tampon intermédiaire, sont triés en tenant compte de règles de tri, qui sont identiques pour toute la pluralité concernée de N unités (VE1 ... VE3) de traitement,
m)
les stades j) et k) et l) sont répétés, dans lequel les instances (RP) de calcul reçoivent et traitent des messages, qui leur sont adressés et qui ont été établis à nouveau dans des stades k) précédents, jusqu'à ce qu'il n'y ait plus, dans le tampon intermédiaire, de messages internes non traités, adressés aux instances (RP) de calcul.

4. Procédé de mise en œuvre assistée par ordinateur suivant l'une des revendications précédentes, **caractérisé en ce que** le voting est mis en œuvre dans une instance (RP) de calcul, qui n'appartient pas à la pluralité N de groupes (GR) de redondances.

5. Procédé de mise en œuvre assistée par ordinateur suivant l'une des revendications précédentes, **caractérisé en ce que** les programmes d'application consistent en des programmes utiles, qui visent à effectuer le processus technique, et des programmes de service, qui soutiennent les fonctions de l'environnement (RU) informatique.

6. Procédé de mise en œuvre assistée par ordinateur suivant l'une des revendications précédentes, **caractérisé en ce que** toutes les unités (VE1 ... VE3) de traitement, qui contiennent les instances (RP) de calcul d'un groupe (GR) de redondances, sont mises en œuvre respectivement sur un autre processeur ou du moins respectivement sur un autre noyau informatique.

7. Environnement informatique comportant plusieurs instances (RP) de calcul, dans lequel respectivement une pluralité N d'instances (RP) de calcul sont rassemblées en l'un de plusieurs groupes (GR) de redondances et, dans chaque groupe (GR) de redondances, toutes les instances (RP) de calcul sont agencées pour effectuer d'une manière redondante un programme d'application,
**caractérisé en ce que** l'environnement (RU) informatique est subdivisé en ladite pluralité N d'unités (VE1 ... VE3) de traitement, dans lequel
n)
dans chacune de ces unités (VE1 ... VE3) de traitement sont rassemblées respectivement plusieurs instances (RP) de calcul,
o)
aucune de ces unités (VE1 ... VE3) de traitement ne contient plusieurs instances (RP) de calcul d'un seul et même groupe (GR) de redondances,
et **en ce que** l'environnement (RU) informatique a une instance (RP) de calcul, qui est agencée
p)
pour comparer, comme voteur (V) lors d'un voting, une pluralité N, produite par les instances (RP) de calcul, de messages redondants, dans le cas où ceux-ci quittent, comme messages extérieurs, une unité (VE1 ... VE3) de traitement, et
q)
ne pas comparer des messages, dans le cas où ceux-ci sont échangés, comme messages internes, entre des instances (RP) de calcul dans l'unité (VE1 ... VE3) de traitement.

8. Environnement informatique suivant la revendication 7, **caractérisé en ce que** plusieurs noyaux informatiques d'un processeur sont rassemblés dans au moins l'une des unités (VE1 ... VE3) de traitement.

9. Environnement informatique suivant la revendication 7 ou 8, **caractérisé en ce que** l'instance (RP) de calcul, agencée en voteur (V), n'appartient pas, comme instance (RP) de calcul extérieure, à un groupe (GR) de redondances, à partir duquel celle-ci est agencée pour recevoir des messages pour le voting.

10. Environnement informatique suivant l'une des revendications 7 à 9, **caractérisé en ce que** celui-ci a plusieurs voteurs (V).

11. Programme d'ordinateur comprenant des instructions de programme qui, lors de l'exécution du programme par l'ordinateur, font que celui-ci exécute le procédé suivant l'une des revendications 1 à 6.

12. Support de mémoire, qui peut être déchiffré par un ordinateur, sur lequel le produit de programme d'ordinateur suivant la revendication mentionnée en dernier est mis en mémoire.
